# EUROPEAN PATENT APPLICATION

(11) **EP 4 631 671 A1**
(43) Date of publication of application: **15.10.2025**
(21) Application number: 24756618.5
(22) Date of filing: 26.01.2024
(51) Int. Cl.: B23Q 3/06

(54) **REVOLVING-TYPE CLAMP**

(30) Priority: 15.02.2023 JP 2023021835
(71) Applicant: Kosmek Ltd., Kobe-shi, Hyogo 651-2241 (JP)
(72) Inventor: OTANI, Kenta, Kobe-shi, Hyogo 651-2241 (JP)
(74) Representative: Dolleymores
(86) International application number: PCT/JP2024/002465
(87) International publication number: WO 2024/171767

(57) **Abstract**

A clamp rod (5) is inserted into a housing (1) to be movable in an axial direction and rotatable about an axial center. A revolving-type clamp includes an operational member (14) which is an operational member (e.g., a ball 14) provided at an end portion on the base end side of the clamp rod (5) to press and move the clamp rod (5) toward the leading end side in the axial direction. The revolving-type clamp is provided in a leading-end-side part of the housing (1) and includes a biasing member (e.g., a spring 19) configured to press and move the clamp rod (5) toward the base end side in the axial direction.

## Description

### [Technical Field]

The present invention relates to a clamp in which a clamp rod rotates.

### [Background Art]

An example of such a clamp is described in Patent Literature 1. The clamp (revolving-type clamp) of the known art is structured as described below.

The revolving-type clamp is constituted by members such as a clamp rod which is movable in an axial direction and rotatable about an axial center, a ball which is inserted into a guide groove formed in an outer circumferential portion of the clamp rod so as to be used for rotating the rod, and a piston which is arranged to be able to advance and retract. A housing of the revolving-type clamp is provided with a clamping chamber and an unclamping chamber to which and from which pressure fluid is supplied and discharged. The revolving-type clamp is driven, i.e., the piston and the clamping rod are driven by using, for example, compressed air, and the compressed air is supplied to and discharged from the clamping chamber and the unclamping chamber each time the revolving-type clamp is driven.

### [Citation List]

### [Patent Literatures]

[Patent Literature 1] Japanese Laid-Open Patent Publication No. 2018-43324

### [Summary of Invention]

### [Technical Problem]

When a large number of the above-described revolving-type clamps are provided, a facility for supplying the compressed air is required to be large. Furthermore, a large number of complicated piping installations are required to supply and discharge the compressed air. These requirements are not preferable in consideration of energy saving and environment protection. Therefore, preferably, compressed air is not used as a driving source.

An object of the present invention is to provide a revolving-type clamp which is driven without needing pressure fluid such as compressed air.

### [Solution to Problem]

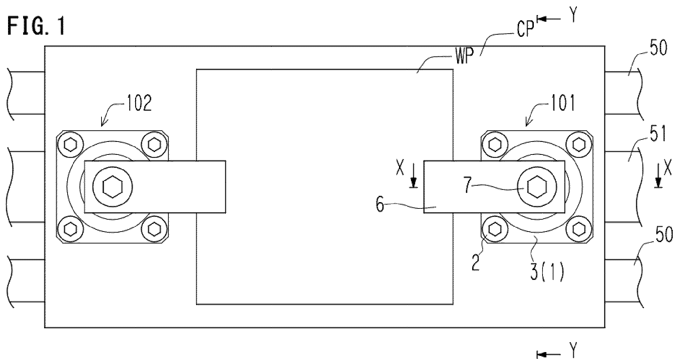

In order to achieve the above object, a revolving-type clamp according to the present invention is structured as follows, for example, as shown in FIG. 1 to FIG. 6.

(1) A revolving-type clamp disclosed in the subject application includes: a housing 1; a clamp rod 5 which is inserted into the housing 1 to be movable in an axial direction and rotatable about an axial center, the clamp rod 5 being inserted into a cylindrical hole 4a of a supporting cylinder portion 4 which is part of the housing 1; an engaging member 9 which is rotatably supported by each of supporting holes 10 which are formed in an inner circumferential wall of the cylindrical hole 4a at predetermined intervals in a circumferential direction, the engaging member 9 being inserted into a guide groove 8 formed in an outer circumferential surface of the clamp rod 5; an operational member 14, 23 which is provided at an end portion of the clamp rod 5 on a base end side, the operational member 14, 23 being configured to press and move the clamp rod 5 toward a leading end side in the axial direction; and a biasing member 19 which is provided in a leading-end-side part of the housing 1 and is configured to press and move the clamp rod 5 toward the base end side in the axial direction.

In the revolving-type clamp disclosed by the subject application, the following functions and effects are provided. The revolving-type clamp does not have a chamber to which and from which pressure fluid is supplied and discharged each time the device is driven, such as a clamping chamber and an unclamping chamber provided in a known revolving-type clamp. In the revolving-type clamp, as the above-described operational member is moved by hand or an external force, the clamp rod is moved toward the leading end side in the axial direction, while rotating. Toward the base end side that is the opposite side in the axial direction, the clamp rod is moved by the above-described biasing member while rotating. Therefore, the revolving-type clamp does not require pressure fluid such as compressed air for the drive.

(2) The revolving-type clamp of the item (1) described above may be arranged so that the operational member 14, 23 is provided at the end portion on the base end side to be rotatable at least about the axial center relative to the clamp rod 5.

This arrangement makes it possible to smoothly rotate the clamp rod.

(3) The revolving-type clamp of the item (1) or (2) described above may be arranged so that, the biasing member 19 is a spring 19, and the spring 19 presses and moves the clamp rod 5 toward the base end side in the axial direction through a ring-shaped spring receiver 20, a flange portion 5b is provided at an intermediate height portion of the clamp rod 5, and between the spring receiver 20 and the flange portion 5b, a bearing member 21 for the biasing member is provided.

According to this arrangement, because the bearing member for the biasing member is provided between the spring receiver and the flange portion, it is possible to smoothly rotate the clamp rod.

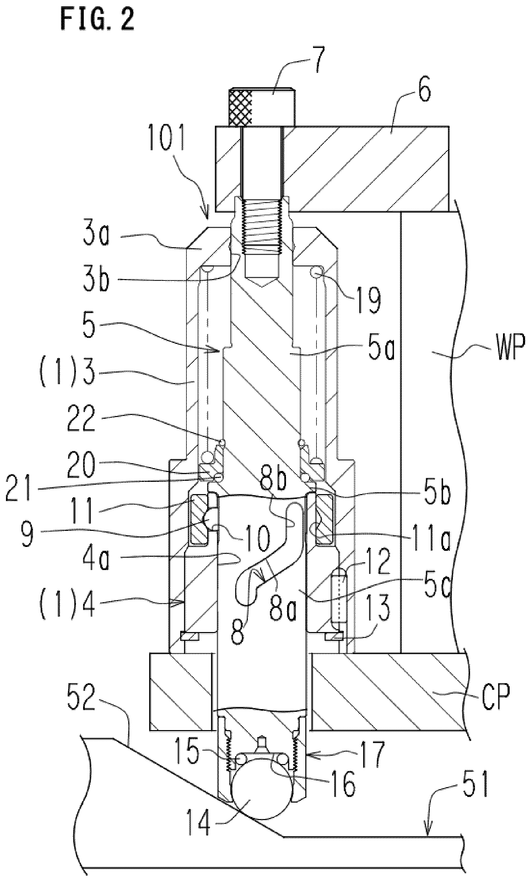

(4) The revolving-type clamp according to any one of the items (1) to (3) described above may be arranged so that, for example, as shown in FIG. 2 to FIG. 4, the operational member 14 is a rotatable sphere 14, and between a base-end-side end face of the clamp rod 5 and the sphere 14, a bearing member 15 for the operational member is provided.

According to this arrangement, because the operational member is a rotatable sphere, it is possible to smoothly move the clamp rod toward the leading end side in the axial direction. Furthermore, because the bearing member for the operational member is provided between the base-end-side end face of the clamp rod and the sphere, it is possible to further smoothly rotate the clamp rod.

(5) The revolving-type clamp of the item (4) described above may further include a cylindrical guide member 17 which is attached to a base end portion of the clamp rod 5, the guide member 17 being configured to prevent the sphere 14 from dropping off and to slide with the sphere 14.

According to this arrangement, when, for example, a force acts on the operational member (sphere) in a direction oblique to the axial direction, it is possible to receive, by the above-described guide member, a component force of this force, which acts in a direction orthogonal to the axial direction. Furthermore, it is possible to prevent the operational member (sphere) from dropping off due to the gravity.

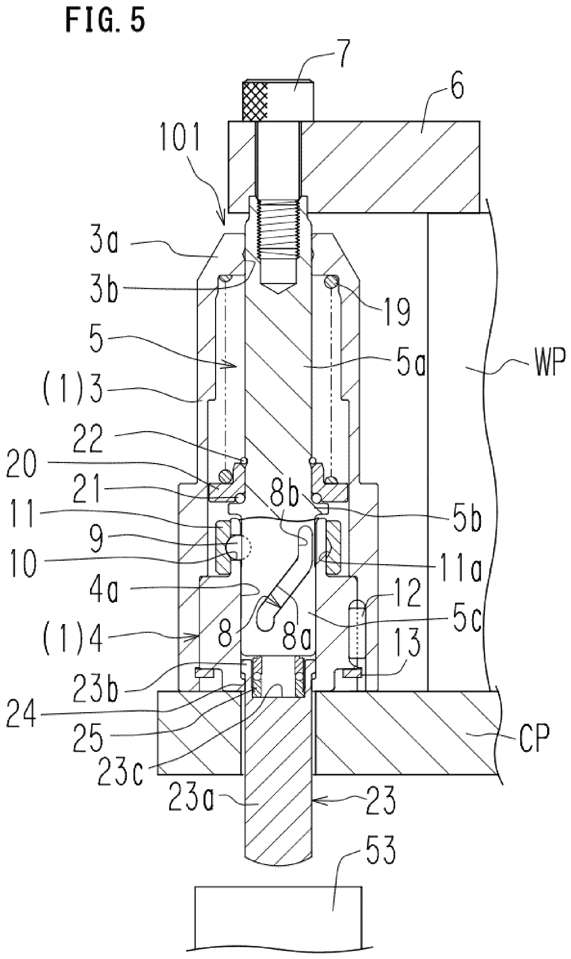

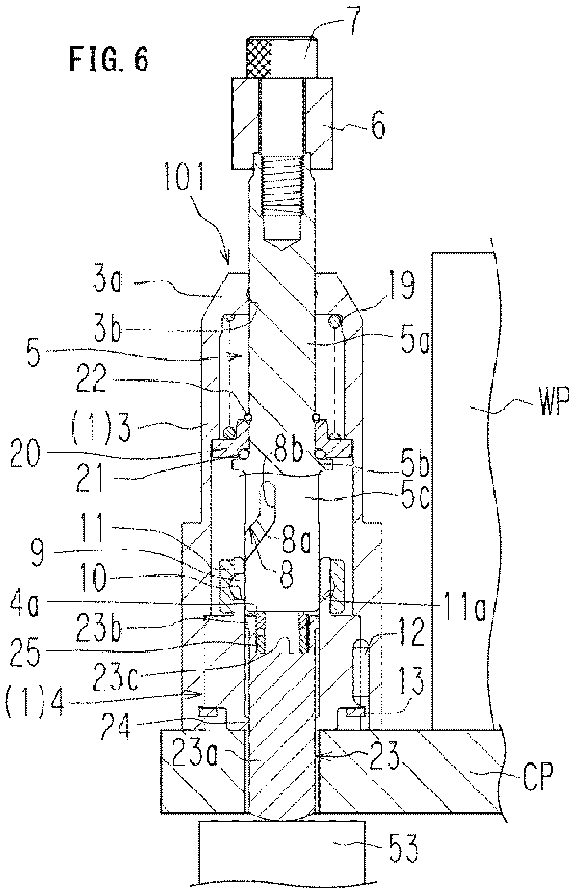

(6) The revolving-type clamp according to any one of the items (1) to (3) described above may be arranged so that, for example, as shown in FIG. 5 and FIG. 6, the operational member 23 is a rod member 23 extending in the axial direction, and between a base-end-side end face of the clamp rod 5 and the rod member 23, a bearing member 25 for the operational member is provided.

According to this arrangement, because the bearing member for the operational member is provided between the base-end-side end face of the clamp rod and the operational member (rod member), it is possible to further smoothly rotate the clamp rod.

### [Advantageous Effects of Invention]

The present invention makes it possible to provide a revolving-type clamp which is driven without needing pressure fluid such as compressed air.

### [Brief Description of Drawings]

FIG. 1 is a plan view showing an example of use of a revolving-type clamp disclosed in the subject application.
FIG. 2 shows First Embodiment of the present invention, and is a sectional side view of a revolving-type clamp in a clamping state, cut along an X-X line in FIG. 1.
FIG. 3 shows First Embodiment of the present invention, and is a sectional side view of the revolving-type clamp in the clamping state, cut along a Y-Y line in FIG. 1.
FIG. 4 is a sectional side view of the revolving-type clamp in an unclamping state shown in FIG. 2 and FIG. 3, and corresponds to FIG. 2.
FIG. 5 shows Second Embodiment of the present invention, and is a sectional side view of a revolving-type clamp in a clamping state.
FIG. 6 is a sectional side view of the revolving-type clamp shown in FIG. 5, which is in an unclamping state.

### [Description of Embodiments]

An embodiment of the present invention describes an example of use of a revolving-type clamp, which is to fix a work pallet WP that is a clamping object to a clamping pallet CP that is a base member.

As shown in FIG. 1, the clamping pallet CP to which two revolving-type clamps 101 and 102 are fixed is configured to run on two rails 50 which are arranged at a predetermined interval. Between the rails 50, a long plate-shaped cam member 51 is provided to extend in the same direction as the rails 50. In the present embodiment, the cam member 51 is stationary. The cam member 51 has a cam portion 52. As shown in FIG. 2 and the like, the cam portion 52 has a trapezoidal shape and convex upward in side view. The revolving-type clamp 101 and the revolving-type clamp 102 are the same revolving-type clamps. Accordingly, the following will describe the revolving-type clamp 101 as a representative of the two clamps.

FIG. 2 to FIG. 4 show First Embodiment of the present invention. Based on FIG. 2 to FIG. 4, the structure of the revolving-type clamp 101 of First Embodiment will be explained.

To the clamping pallet CP, a housing 1 of the revolving-type clamp 101 is fixed by using bolts 2 (see FIG. 1). The housing 1 includes a housing body portion 3 and a supporting cylinder portion 4 attached to a base end portion of the housing body portion 3.

Into a cylindrical hole 3b formed in an upper wall 3a (leading end wall) of the housing body portion 3, a clamp rod 5 is inserted to be movable in an axial direction (up-down direction) of the clamp rod 5 and rotatable about an axial center of the clamp rod 5. To a leading end portion of the clamp rod 5, an arm 6 is fixed by using a bolt 7.

From the leading end side, the following portions are provided in the clamp rod 5 in order: a rod body portion 5a; a flange portion 5b larger than the rod body portion 5a in diameter; and a lower rod portion 5c. The lower rod portion 5c is slidably inserted into the cylindrical hole 4a of the supporting cylinder portion 4.

In the outer circumferential surface of the lower rod portion 5c, three guide grooves 8 are formed to be apart from each other in the circumferential direction at predetermined intervals. Each of FIG. 2 to FIG. 4 shows only one of the three guide grooves 8. Each guide groove 8 is a bow-shaped guide groove in cross section, and is formed in such a way that a spiral-shaped rotary groove 8a and a rectilinear straight groove 8b are lined up. The three rotary grooves 8a are provided to be in parallel to one another and the three straight grooves 8b are provided to be in parallel to one another. The inclination angle of the rotary groove 8a is, for example, arranged to fall within a range between 20 degrees and 40 degrees relative to the radial direction (horizontal direction). As the inclination angle of the rotary groove 8a is set in this way, the lead of the rotary groove 8a is short and hence the stroke of the clamp rod 5 for rotation is small. It is noted that the number of the guide grooves 8 may not be three.

Into each of the above-described guide grooves 8, a ball 9 that is an engaging member is inserted. The ball 9 is rotatably supported by each of supporting holes 10 which are formed in an inner circumferential wall of the cylindrical hole 4a of the supporting cylinder portion 4 at predetermined intervals in the circumferential direction. Across these three balls 9, an annular sleeve 11 is externally fitted to be rotatable about the axial center. A V-shaped groove 11a is formed in the inner circumferential surface of the sleeve 11. Each ball 9 is able to rotate at two points, i.e., upper and lower points of the V-shaped groove 11a.

The rotation of the supporting cylinder portion 4 relative to the housing body portion 3 is prevented by a positioning pin 12. This makes it possible to align the position (phase) of the clamp rod 5 relative to the housing body portion 3 in the circumferential direction. The supporting cylinder portion 4 does not drop off from the housing body portion 3 thanks to the presence of a retaining ring 13.

At an end portion on the base end side of the lower rod portion 5c, a ball 14 (sphere) is rotatably provided as an operational member. The ball 14 is, for example, a ball made of metal. In the present embodiment, between a base-end-side end face of the lower rod portion 5c and the ball 14, balls 15 are provided as bearing members for the operational member. The balls 15 are accommodated in a recess 16 formed in the base-end-side end face of the lower rod portion 5c. Each ball 15 is, for example, a ball made of metal. The balls 15 are able to receive the load of the clamp rod 5 exerted in the axial direction. Because the balls 15 are accommodated in the recess 16, they are able to partially receive a load exerted in a direction orthogonal to the axial direction.

To an outer circumferential portion of the base end of the lower rod portion 5c, a cylindrical guide member 17 is screwed and fixed. The outer diameter of the lower rod portion 5c is identical with the outer diameter of the guide member 17. An end portion of the guide member 17 is arranged to catch the ball 14 therein. The guide member 17 prevents the ball 14 from dropping and slides with the ball 14 at the inner circumferential surface of the end portion. The ball 14 partially protrudes from the end portion of the guide member 17.

In a cylindrical hole space on the leading end side of the housing body portion 3, a spring 19 is provided as a biasing member which biases the flange portion 5b of the clamp rod 5 downward (i.e., toward the base end side). The spring 19 is a compression coil spring. The lower end of the spring 19 is received by a ring-shaped spring receiver 20. Between the spring receiver 20 and the flange portion 5b, balls 21 are provided as bearing members for the biasing member. Each ball 21 is, for example, a ball made of metal. The balls 21 are able to receive the load of the clamp rod 5 exerted in the axial direction. The movement of the spring receiver 20 in the up-down direction (axial direction) is restricted by a retaining ring 22. The rotation of the spring receiver 20 about the axial direction is not restricted by the clamp rod 5. In other words, the clamp rod 5 is rotatable about the axial center relative to the spring receiver 20. Due to the presence of the balls 21, there is a narrow gap between the bottom surface of the spring receiver 20 and the top surface of the flange portion 5b.

As the spring 9, a spring of another type such as a disc spring may be employed in place of the compression coil spring. (This applies to other embodiments.)

The revolving-type clamp 101 structured as described above operates as follows.

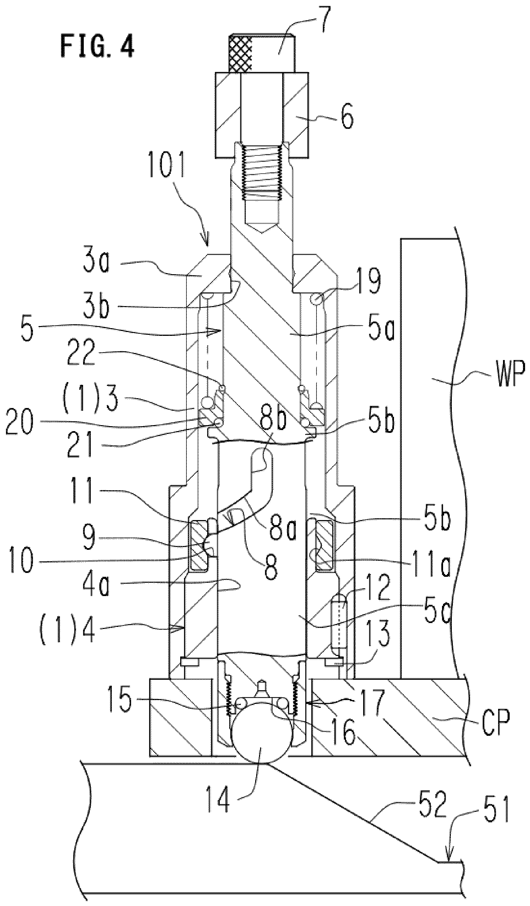

In the unclamping state shown in FIG. 4, the ball 14 is pressed upward by the cam portion 52 of the cam member 51, i.e., by an external force. Due to this, the ball 14 is positionally high as compared to the clamping state shown in FIG. 1 to FIG. 3. In this state, the ball 14 presses the clamp rod 5 upward (toward the leading end side) against the biasing force of the spring 19.

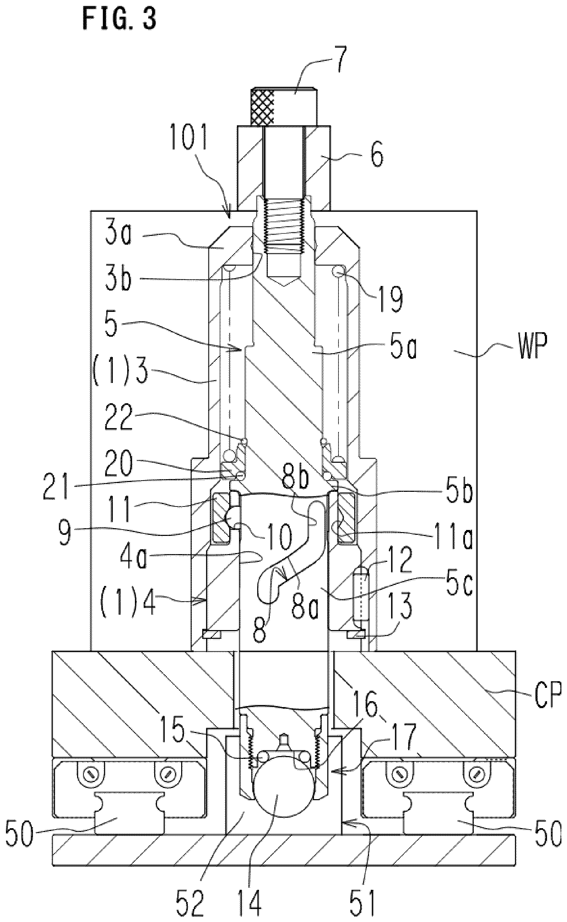

When the work pallet WP is clamped by the clamping pallet CP, the clamping pallet CP is caused to run on the rails 50. The external force exerted by the cam portion 52 decreases, the spring 19 presses the flange portion 5b of the clamp rod 5 downward (toward the base end side) through the spring receiver 20, and the clamp rod 5 descends. The clamp rod 5 descends while rotating clockwise in plan view along the rotary grooves 8a, and then descends straight down along the straight grooves 8b. The leading end portion of the arm 6 presses the work pallet WP from above. In this way, the revolving-type clamp 101 is switched from the unclamping state shown in FIG. 4 to the clamping state shown in FIG. 2 and FIG. 3.

At this stage, i.e., when the clamp rod 5 descends while rotating, the balls 21 which are provided between the spring receiver 20 and the flange portion 5b and function as the bearing members for the biasing member rotate around the rod body portion 5a in accordance with the rotation of the clamp rod 5. The friction force between the balls 21 and the flange portion 5b is therefore small, and the clamp rod 5 descends while smoothly rotating.

The ball 14 is rotatable in all directions because it is a sphere. Due to this, when the ball 14 descends along a slope surface of the cam portion 52 while rotating, the clamp rod 5 is scarcely influenced by the ball 14 regarding the rotation of the clamp rod 5. The clamp rod 5 therefore descends while smoothly rotating. In the present embodiment, between the base-end-side end face of the lower rod portion 5c and the ball 14, the balls 15 are provided as bearing members for the operational member. It is therefore possible to further smoothly rotate the clamp rod 5.

When the revolving-type clamp 101 is switched from the clamping state shown in FIG. 2 and FIG. 3 to the unclamping state shown in FIG. 4, the clamping pallet CP is caused to run on the rails 50 so that the ball 14 climbs on an upper part of the cam portion 52 of the cam member 51 (see FIG. 4). As a result, the ball 14 presses the clamp rod 5 upward (toward the leading end side) against the biasing force of the spring 19, and hence the clamp rod 5 ascends. The clamp rod 5 ascends straight up along the straight grooves 8b, and then ascends along the rotary grooves 8a while rotating counterclockwise in plan view. Consequently, the revolving-type clamp 101 is switched to the unclamping state shown in FIG. 4.

As described above, the ball 14 is rotatable in all directions because it is a sphere. Due to this, when the ball 14 ascends along the slope surface of the cam portion 52 while rotating, the clamp rod 5 is scarcely influenced by the ball 14 regarding the rotation of the clamp rod 5. The clamp rod 5 therefore ascends while smoothly rotating. In the present embodiment, between the base-end-side end face of the lower rod portion 5c and the ball 14, the balls 15 are provided as bearing members for the operational member. It is therefore possible to further smoothly rotate the clamp rod 5.

Furthermore, the balls 21 which are provided between the spring receiver 20 and the flange portion 5b to function as the bearing members for the biasing member rotate around the rod body portion 5a in accordance with the rotation of the clamp rod 5. The friction force between the balls 21 and the flange portion 5b is therefore small, and the clamp rod 5 ascends while smoothly rotating.

Because the ball 14 is rotational, a lateral reaction force from the cam portion 52 can be partially released by the rotating ball 14. It is therefore possible to suppress the occurrence of entanglement between the inner circumferential surface of the cylindrical hole 4a of the supporting cylinder portion 4 and the lower rod portion 5c of the clamp rod 5. It is therefore possible to allow the clamp rod 5 to further smoothly ascend toward the leading end side.

The revolving-type clamp 101 does not have a chamber to which and from which pressure fluid is supplied and discharged each time the device is driven, such as a clamping chamber and an unclamping chamber provided in a known revolving-type clamp. In the revolving-type clamp 101, as the ball 14 is moved (pressed upward) by the external force, the clamp rod 5 is moved toward the leading end side while rotating. Toward the base end side opposite to the leading end side, the clamp rod 5 is moved by the spring 19 while rotating. Therefore, the revolving-type clamp 101 does not require pressure fluid such as compressed air for the drive. The ball 14 may be manually pressed and moved by hand.

FIG. 5 and FIG. 6 show Second Embodiment of the present invention. A revolving-type clamp of Second Embodiment is different from the revolving-type clamp of First Embodiment in terms of the structure of the operational member provided at the end portion on the base end side of the clamp rod 5. In regard to members constituting the revolving-type clamp of Second Embodiment, those identical with the members constituting the revolving-type clamp of First Embodiment are denoted by the same reference numbers.

The operational member of the present embodiment is a rod 23 which is a rod member extending in an axial direction of a clamp rod 5 from an end portion on the base end side of the clamp rod 5. From the base end side, the following portions are provided in the rod 23 in order: a rod body portion 23a having an end face circular in cross section; and a flange portion 23b provided at a rod end portion which is larger than the rod body portion 23a in diameter. In an end face of the rod 23 on the side where the flange portion 23b is provided, a bottomed hole 23c is formed.

A lower end portion (base end portion) of a supporting cylinder portion 4 which is part of a housing 1 is a small diameter portion 24 whose inner circumferential surface is shorter in diameter than a cylindrical hole 4a. The flange portion 23b of the rod 23 is arranged to be larger in diameter than the small diameter portion 24. The flange portion 23b and the small diameter portion 24 prevent the rod 23 from dropping off. The flange portion 23b is slidable with the cylindrical hole 4a whereas the small diameter portion 24 is slidable with the rod body portion 23a.

Between the base-end-side end face of the clamp rod 5 and the rod 23, a bearing 25 is provided as a bearing member for the operational member. In the present embodiment, the bearing 25 is accommodated in the hole 23c formed in the end face of the rod 23. The bearing 25 is able to receive the load of the clamp rod 5 exerted in the axial direction.

The revolving-type clamp structured as described above operates as follows.

In an unclamping state shown in FIG. 6, the rod 23 is pressed upward from below by a member 53, i.e., by an external force. Due to this, the rod 23 is positionally high as compared to a clamping state shown in FIG. 5. In this state, the rod 23 presses the clamp rod 5 upward (toward the leading end side) against the biasing force of a spring 19.

When a work pallet WP is clamped by a clamping pallet CP, the member 53 is moved downward. As a result, the external force is no longer exerted by the member 53, the spring 19 presses the flange portion 5b of the clamp rod 5 downward (toward the base end side) trough the spring receiver 20, and the clamp rod 5 descends. The clamp rod 5 descends while rotating clockwise in plan view along rotary grooves 8a, and then descends straight down along straight grooves 8b. A leading end portion of an arm 6 presses the work pallet WP from above. In this way, the revolving-type clamp is switched from the unclamping state shown in FIG. 6 to the clamping state shown in FIG. 5.

At this stage, in the same manner as in First Embodiment, balls 21 which are bearing members for the biasing member rotate around a rod body portion 5a in accordance with the rotation of the clamp rod 5. Due to this, the friction force between the balls 21 and the flange portion 5b is small and the clamp rod 5 descend while smoothly rotating.

The rod 23 is rotatable relative to the clamp rod 5, about the axial center of the clamp rod 5. Due to this, the clamp rod 5 is scarcely influenced by the rod 23 regarding the rotation of the clamp rod 5. The clamp rod 5 therefore descends while smoothly rotating. In the present embodiment, between a base-end-side end face of the clamp rod 5c and the rod 23, the bearing 25 is provided as a bearing member for the operational member. It is therefore possible to further smoothly rotate the clamp rod 5.

When the revolving-type clamp is switched from the clamping state shown in FIG. 5 to the unclamping state shown in FIG. 6, the member 53 presses the rod 23 upward from below. As a result, the rod 23 presses the clamp rod 5 upward (toward the leading end side) against the biasing force of the spring 19, and hence the clamp rod 5 ascends. The clamp rod 5 ascends straight up along the straight grooves 8b, and then ascends along the rotary grooves 8a while rotating counterclockwise in plan view. Consequently, the revolving-type clamp 101 is switched to the unclamping state shown in FIG. 6.

As described above, the rod 23 is rotatable relative to the clamp rod 5, about the axial center of the clamp rod 5. Due to this, the clamp rod 5 is scarcely influenced by the rod 23 regarding the rotation of the clamp rod 5. The clamp rod 5 therefore ascends while smoothly rotating. In the present embodiment, between the base-end-side end face of the clamp rod 5c and the rod 23, the bearing 25 is provided as a bearing member for the operational member. It is therefore possible to further smoothly rotate the clamp rod 5.

Furthermore, the balls 21 which are provided between the spring receiver 20 and the flange portion 5b to function as the bearing members for the biasing member rotate around the rod body portion 5a in accordance with the rotation of the clamp rod 5. The friction force between the balls 21 and the flange portion 5b is therefore small, and the clamp rod 5 ascends while smoothly rotating.

The present invention is not limited to the embodiments above, and it is possible to suitably combine the elements of the embodiments or to make various modifications to the embodiments above as long as it does not depart from the spirit of the present invention.

For example, the above-described embodiments are changeable as follows.

The ball 14 and the rod 23 (operational member) may be manually pressed by hand to move the clamp rod 5 toward the leading end side.

While the cam member 51 is stationary (fixed) in the embodiments above, the cam member 51 may be moved so that the ball 14 (operational member) is pressed and moved by the cam portion 52. The means for generating the external force for moving the ball 14 (operational member) is not limited to members such as the cam member 51.

In place of the balls 21, a commercially-available bearing may be used as the bearing member for the biasing member, which is provided between the spring receiver 20 and the flange portion 5b of the clamp rod 5. In addition to this, a cylindrical member may be used in place of the balls 21. (The same applies to the balls 15 functioning as the bearing members for the operational member.)

In place of the bearing 25, plural balls or plural cylindrical members may be used as bearing members for the operational member, which are provided between a base-end-side end face of the clamp rod 5 and the rod 23 which is a rod member.

Instead of being rotated clockwise in plan view at the time of clamping, the clamp rod 5 may be rotated counterclockwise in plan view at the time of clamping. As a matter of course, the rotational angle of the clamp rod 5 can be set at a desired angle such as 90 degrees.

The sleeve 11 may be omitted. In such a case, bottomed supporting holes are formed at predetermined intervals in the circumferential direction, in the inner circumferential wall of the cylindrical hole 4a at a thick part of the supporting cylinder portion 4. The balls 9 are supported by these supporting holes.

In the guide groove 8, the rectilinear straight groove 8b may be omitted.

The revolving-type clamp may be attached to a table or a lea ding end portion of a robot. The clamping object may be a wo rkpiece or a mold.

### [Reference Signs List]

1: housing, 4: supporting cylinder portion, 4a: cylindrical hole, 5: clamp rod, 5b: flange portion, 8: guide groove, 9: ball (engaging member), 10: supporting hole, 14: ball (sphere, operational member), 15: ball (bearing member for operational member), 17: guide member, 19: spring (biasing member), 20: spring receiver, 21: ball (bearing member for biasing member), 23: rod (rod member, operational member), 25: bearing (bearing member for operational member), 101: revolving-type clamp

## Claims

1. A revolving-type clamp comprising:
a housing (1);
a clamp rod (5) which is inserted into the housing (1) to be movable in an axial direction and rotatable about an axial center, the clamp rod (5) being inserted into a cylindrical hole (4a) of a supporting cylinder portion (4) which is part of the housing (1);
an engaging member (9) which is rotatably supported by each of supporting holes (10) which are formed in an inner circumferential wall of the cylindrical hole (4a) at predetermined intervals in a circumferential direction, the engaging member (9) being inserted into a guide groove (8) formed in an outer circumferential surface of the clamp rod (5);
an operational member (14, 23) which is provided at an end portion of the clamp rod (5) on a base end side, the operational member (14, 23) being configured to press and move the clamp rod (5) toward a leading end side in the axial direction; and
a biasing member (19) which is provided in a leading-end-side part of the housing (1) and is configured to press and move the clamp rod (5) toward the base end side in the axial direction.

2. The revolving-type clamp according to claim 1, wherein,
the operational member (14, 23) is provided at the end portion on the base end side to be rotatable at least about the axial center relative to the clamp rod (5).

3. The revolving-type clamp according to claim 1 or 2, wherein, the biasing member (19) is a spring (19), and the spring (19) presses and moves the clamp rod (5) toward the base end side in the axial direction through a ring-shaped spring receiver (20),
a flange portion (5b) is provided at an intermediate height portion of the clamp rod (5), and
between the spring receiver (20) and the flange portion (5b), a bearing member (21) for the biasing member is provided.

4. The revolving-type clamp according to any one of claims 1 to 3, wherein,
the operational member (14) is a rotatable sphere (14), and between a base-end-side end face of the clamp rod (5) and the sphere (14), a bearing member (15) for the operational member is provided.

5. The revolving-type clamp according to claim 4, further comprising
a cylindrical guide member (17) which is attached to a base end portion of the clamp rod (5), the guide member (17) being configured to prevent the sphere (14) from dropping off and to slide with the sphere (14).

6. The revolving-type clamp according to any one of claims 1 to 3, wherein,
the operational member (23) is a rod member (23) extending in the axial direction, and
between a base-end-side end face of the clamp rod (5) and th e rod member (23), a bearing member (25) for the operational member is provided.
